# EUROPEAN PATENT APPLICATION

(11) **EP 4 832 577 A1**
(43) Date of publication of application: **28.10.2026**
(21) Application number: 24921058.4
(22) Date of filing: 04.02.2024
(51) Int. Cl.: H04W 36/00

(54) **WIRELESS COMMUNICATION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN); WU, Hao, Dongguan, Guangdong 523860 (CN)
(74) Representative: RGTH
(86) International application number: PCT/CN2024/075695
(87) International publication number: WO 2025/161005

(57) **Abstract**

Provided are a wireless communication method and a terminal device. The method comprises: a terminal device determines a first configuration on the basis of first information, wherein the first configuration is used for cell handover of the terminal device, and the first configuration comprises a master cell group (MCG) configuration and/or a secondary cell group (SCG) configuration. In embodiments of the present application, configuration information (i.e., the first configuration) comprising the MCG configuration and/or the SCG configuration is determined to support cell handover of the terminal device. For example, when the first configuration merely comprises the MCG configuration, MCG handover without SCG can be supported. For another example, when the first configuration comprises the MCG configuration and the SCG configuration, MCG handover with the SCG can be supported. The method not only helps to improve the throughput of a system, but also improves the flexibility of configuration.

## Description

### TECHNICAL FIELD

This application relates to the field of communications technologies, and more specifically, to a wireless communication method and a terminal device.

### BACKGROUND

In the R18, cell handover, such as L1/L2-triggered mobility (L1/L2-triggered mobility, LTM), supports master cell group (master cell group, MCG) handover and secondary cell group (secondary cell group, SCG) handover in a dual connectivity (dual connectivity, DC) scenario. However, in the DC scenario, when the terminal device performs MCG handover, such as MCG LTM, the SCG needs to be released first. In this case, the system throughput may decrease.

### SUMMARY

This application provides a wireless communication method and a terminal device. Various aspects of this application are described below.

According to a first aspect, a wireless communication method is provided, and the method includes: determining, by a terminal device, a first configuration based on first information, where the first configuration is used for cell handover of the terminal device, and the first configuration includes a master cell group MCG configuration and/or a secondary cell group SCG configuration.

According to a second aspect, a terminal device is provided, and the device includes: a determining unit, configured to determine a first configuration based on first information, where the first configuration is used for cell handover of the terminal device, and the first configuration includes a master cell group MCG configuration and/or a secondary cell group SCG configuration.

According to a third aspect, a terminal device is provided, including a processor, a memory, and a communications interface. The memory is configured to store one or more computer program, and the processor is configured to invoke the computer program in the memory to cause the terminal device to perform some or all of the steps of the method in the first aspect.

According to a fourth aspect, an embodiment of the present application provides a communications system, and the system includes the foregoing terminal device and/or network device. In another possible design, the system may further include another device that interacts with the terminal device in the solution provided in embodiments of this application.

According to a fifth aspect, an embodiment of the present application provides a computer-readable storage medium, where the computer-readable storage medium stores a computer program, and the computer program causes the terminal device to perform some or all of the steps of the method in the first aspect.

According to a sixth aspect, an embodiment of the present application provides a computer program product, where the computer program product includes a non-transitory computer-readable storage medium storing a computer program, and the computer program is operable to cause the terminal device to perform some or all of the steps of the method in the first aspect. In some implementations, the computer program product may be a software installation package.

According to a seventh aspect, an embodiment of the present application provides a chip, where the chip includes a memory and a processor, and the processor may invoke and run the computer program from the memory, so as to implement some or all of the steps described in the method in the first aspect.

In embodiments of the present application, configuration information (i.e., a first configuration) including an MCG configuration and/or a SCG configuration is determined to support cell handover of the terminal device. For example, the first configuration includes only an MCG configuration, and thus MCG handover without a SCG can be supported. For another example, the first configuration includes the MCG configuration and the SCG configuration, and thus MCG handover including the SCG can be supported. The method can support coexistence of the foregoing two scenarios, thereby facilitating improving a system throughput, and improving configuration flexibility.

### BRIEF DESCRIPTION OF DRAWINGS

FIG. 1 is a schematic diagram of a wireless communications system to which an embodiment of the present application is applicable.
FIG. 2 is a schematic diagram of an LTM-based cell handover procedure.
FIG. 3 is a schematic flowchart of a wireless communication method according to an embodiment of the present application.
FIG. 4 is a schematic structural diagram of a terminal device according to an embodiment of the present application.
FIG. 5 is a schematic structural diagram of an apparatus according to an embodiment of the present application.

### DESCRIPTION OF EMBODIMENTS

Technical solutions in this application are described below with reference to the accompanying drawings.

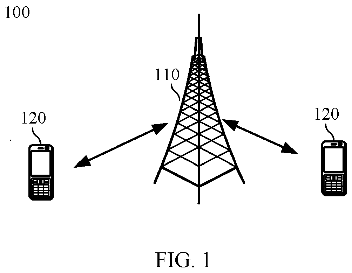

FIG. 1 shows a wireless communications system 100 to which embodiments of this application are applicable. The wireless communications system 100 may include a network device 110 and a terminal device 120. The network device 110 may be a device communicating with the terminal device 120. The network device 110 may provide communication coverage for a specific geographic area, and may communicate with the terminal device 120 located in the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in this application embodiment may also be referred to as a user equipment (user equipment, UE), an access terminal, a subscriber unit, a subscriber station, a mobile station, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart household device communicate with each other, without relaying a communication signal by using a base station.

The network device in embodiments of this application may be a device for communicating with the terminal device. The network device may also be referred to as an access network device or a radio access network device. For example, the network device may be a base station. The network device in embodiments of this present application may be a radio access network (radio access network, RAN) node (or device) that connects the terminal device to a radio network, a core network device, a model monitoring management device, an operation administration and maintenance (operation administration and maintenance, OAM) device, or the like. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station MeNB, a secondary station SeNB, a multi-standard radio (MSR) node, a home base station, a network controller, an access node, a radio node, an access point (access point, AP), a transmission node, a transceiver node, a base band unit (base band unit, BBU), a remote radio unit (remote radio unit, RRU), an active antenna unit (active antenna unit, AAU)), a remote radio head (remote radio head, RRH), a central unit (central unit, CU), distributed unit (distributed unit, DU), a centralized unit-control plane (centralized unit-control plane, CU-CP), a centralized unit-user plane (centralized unit-user plane, CU-UP) positioning node and so on. The core network device may broadly cover various names in the following, or may be replaced with the following names, for example, a location management function (location management function, LMF) network element, a network slice selection function (network slice selection function, NSSF), an authentication server function (authentication server function, AUSF), a unified data management (unified data management, UDM), a access and mobility management function (access and mobility management function, AMF), a session management function (session management function, SMF), a policy control function (policy control function, PCF), a user plane function (user plane function, UPF), a sensing control function (sensing function, SF), network data analytics function (network data analytics function, NWDAF) network element, and an AI function management entity.

The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network side device in a 6G network, a device that functions as a base station in a future communications system, or the like. The base station may support networks with a same access technology or different access technologies. A specific technology and a specific device form used by the network device are not limited in embodiments of this application. The base station may be fixed or mobile. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

The base station may be fixed or mobile. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

### Cell handover

Cell handover (handover, HO) aims at improving continuity of services provided by a communications system for a terminal device. In a wireless communications system, a terminal device may move from one cell (also referred to as a "source cell") to another cell (also referred to as a "target cell"). Usually, the cell handover may be classified into: a conventional handover mechanism and a conditional handover mechanism.

In embodiments of this application, a source cell may refer to a cell that provides a service to a terminal device before a handover. A target cell may refer to a cell that provides a service to the terminal device after a handover.

It should be understood that a cell may refer to a coverage area of a network device, that is, a cell corresponds to a network device. In other words, in embodiments of this application, the source cell corresponds to a source network device (for example, a source base station), and the target cell corresponds to a target network device(for example, a target base station).

It should be further understood that in embodiments of this application, "a source cell" may be replaced by "a network device to which the source cell belongs", and "a target cell" may be replaced by "a network device to which the target cell belongs".

It should be further understood that in embodiments of this application, the source cell and the target cell may belong to a same network device (such as the base station), or the source cell and the target cell may belong to different network devices. In other words, in some embodiments, the source network device and the target network device may refer to a same network device. This is not limited in embodiments of this application.

### Conventional handover

In a wireless communications system (such as an LTE system or an NR system), when a terminal device that is using a network service moves from one cell to another cell, or due to reasons such as load adjustment of a wireless transmission service, activation operation and maintenance, and a device fault, to ensure continuity and quality of service of communication of the terminal device, the system is required to transfer a communication link between the terminal device and the original cell to a new cell, that is, perform a cell handover procedure. The cell handover mechanism may also be referred to as a conventional handover.

With reference to steps 1 to 4, the following briefly describes a process of cell handover based on L3 measurement/signaling.

In step 1, the source network device transmits a handover request (handover request) to the target network device.

The source network device may trigger a handover based on an L3 measurement result reported by the terminal, and transmit a handover request to the target cell by using an Xn interface.

In step 2, the target network device transmits a handover request acknowledgement (handover request acknowledge) to the source network device.

The target network device may accept the handover request from the source network device and provide the RRC configuration of the target network device as a part of the handover request acknowledgement, so as to be fed back to the source network device.

In step 3, the source network device transmits an RRC reconfiguration (RRC reconfiguration) message to the terminal device.

The source network device transmits an RRC reconfiguration message to the terminal device to instruct the terminal device to initiate a handover procedure, and transmits an RRC configuration message for accessing the target cell to the terminal device.

In step 4, the terminal device transmits an RRC reconfiguration complete (RRC reconfiguration complete) message to the target network device.

The terminal device accesses the target cell and transmits an RRC configuration completion message to the target cell. To establish uplink synchronization with the target cell, the terminal device needs to initiate random access procedure to the target cell.

### conditional handover (conditional handover, CHO)

The objective of the conditional handover is to improve the reliability and robustness of user handover, to solve the problem of handover being too late due to a long handover preparation time during the handover process, or the problem of handover failure caused by sharp degrading in a channel quality of a source cell during the handover process. The core idea of the conditional handover is to pre-configure handover command content to the terminal device. When a specific condition is met, the terminal device can independently execute the configuration in the handover command, and directly initiate handover access to the target cell that meets the condition. When the handover condition is met, the terminal device no longer triggers measurement report, and the terminal device obtains the configuration in the handover command in advance. Therefore, the foregoing problem that the measurement report and the handover command cannot be correctly received is solved. In particular, for a high-speed moving scenario or a scenario in which a signal fades rapidly in the handover area, the conditional handover can greatly improve a handover success rate.

Generally, a handover process may be divided into three phases: handover preparation, handover execution, and handover completion. The following briefly describes the conditional handover process with reference to step 1 to step 8c.

### First phase: handover preparation (Steps 1 to 7)

In step 1, measurement control and reporting (measurement control and reports) are performed between the source network device and the terminal device. Specifically, the source network device triggers the terminal device to perform neighboring cell measurement, so that the terminal device may measure a neighboring cell, and report a measurement result to the source network device.

Before step 1, user data (user data) may be transmitted between the terminal device and the source network device. User data may be transmitted between the source network device and the UPF.

Before step 1, the first phase may further include step 0. In step 0, the AMF provides mobile control information (mobility control information provided by AMF).

In step 2, the source network device evaluates the measurement result reported by the terminal device to decide whether to trigger the handover (CHO decision).

In step 3, if the source network device decides to trigger the handover, the source network device may transmit a handover request (handover request) to the target network device and another candidate target network device.

In step 4, after receiving the handover request transmitted by the source network device, the target network device and the another candidate target network device may start admission (admission control) according to service information carried in the source network device, and perform radio resource configuration.

In step 5, the target network device and another candidate target network device transmit a handover request acknowledgement message (handover request acknowledge) to the source network device. The handover request acknowledgement message includes an RRC reconfiguration message of the target network device and another candidate target network device.

In step 6, after receiving the handover request acknowledgement message of the target network device and the another candidate target network device, the source network device may transmit an RRC reconfiguration message (RRC reconfiguration) of the target network device and the another candidate target network device to the terminal device.

In step 7, the terminal device transmits an RRC reconfiguration complete message to the source network device. So far, the handover preparation phase is completed.

### Second phase: handover execution (Steps 7a to 8)

In step 7a, the terminal device evaluates a condition of the conditional handover (evaluate the CHO conditions) and performs early status transfer (early status transfer) based on an evaluation result. If the conditional handover condition is met, the terminal device detaches from the old cell and synchronizes with the new cell (detach from the old cell, synchronize to the new cell).

In step 8, the conditional handover is completed (CHO handover completion).

### Third phase: handover completion (Steps 8a to 8c)

In step 8a, the target network device transmits handover success (handover success) information to the source network device.

In step 8b, the source network device may forward buffered data, a data packet being transmitted, a data association sequence number (sequence number, SN), and the like to the target network device through SN state transmission (SN status transfer).

In step 8c, the source network device transmits handover cancel (handover cancel) information to the target network device and another candidate target network device.

### LTM

In a related technology, a handover process is triggered by L3 signaling (RRC reconfiguration). To further reduce a delay of the L3 handover process and ensure service continuity, the R18 supports cell handover triggered based on the L1/L2 signaling, that is, LTM.

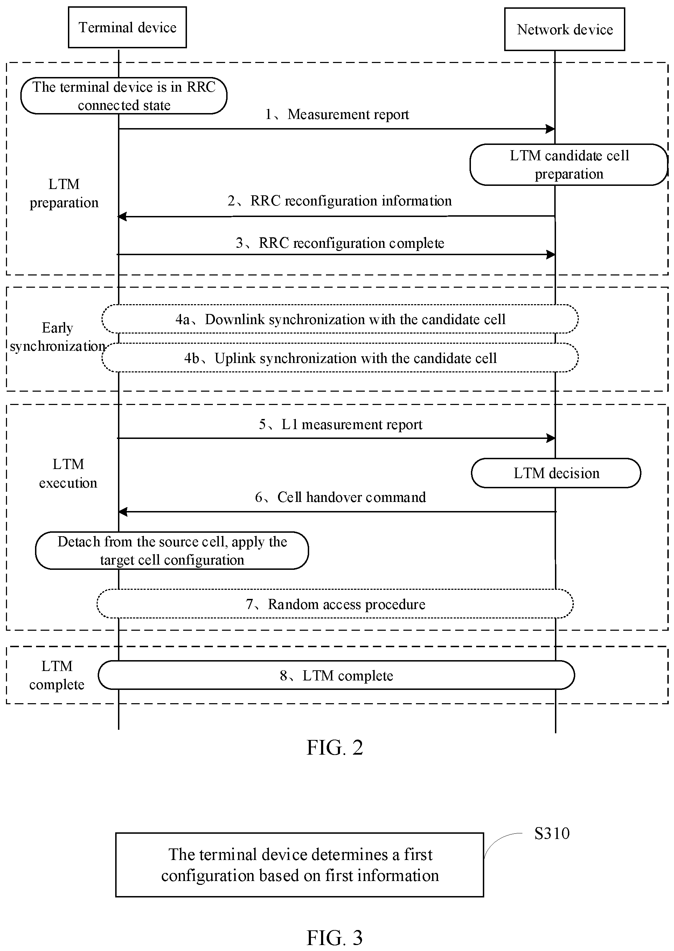

The LTM-based cell handover process may be divided into four phases: LTM preparation, early synchronization, LTM execution and LTM completion. With reference to FIG. 2, the following briefly describes an LTM-based cell handover procedure.

### First phase : LTM preparation (Steps 1 to 3)

In step 1, the terminal device in a RRC connected state reports a measurement report to the network device.

The measurement report in this step is based on L3 measurement. The network device may determine, based on the measurement result, to initiate the LTM process and trigger candidate cell preparation.

In step 2, the network device transmits an RRC reconfiguration message to the terminal device.

The network device may transmit, to the terminal device, an RRC message (that is, a RRC reconfiguration message) that includes an LTM candidate cell configuration, where a quantity of the candidate cell is one or more.

In step 3, the terminal device stores the LTM candidate cell configuration and feeds back a reconfiguration complete message (RRC reconfiguration complete message) to the network device.

### Second phase: Early synchronization (step 4a and step 4b)

In step 4a, the terminal device performs downlink synchronization with the candidate cell.

In step 4b, the terminal device performs uplink synchronization with the candidate cell.

Before receiving the LTM cell handover command, the terminal device may perform uplink/downlink synchronization to the candidate cell in advance, so as to reduce an interruption delay of the handover process.

### Third phase: LTM execution (Steps 5 to 7)

In step 5, the terminal device performs L1 measurement on each candidate cell, and reports an L1 measurement result to the network device.

In step 6, the network device determines the target cell based on the L1 measurement result reported by the terminal device, and instructs the terminal device to switch to the target cell by using the medium access control control element (media access control control element, MAC CE).

In step 7, if the terminal device currently does not have a valid timing advance (timing advance, TA) of the target cell, the terminal device initiates a random access procedure to the target cell after receiving the LTM handover indication.

### Fourth phase: LTM Complete (Step 8)

In step 8, the LTM is completed.

To further enhance the robustness of the LTM process, an LTM that may be triggered by the terminal device is proposed in the related art, or is referred to as a condition LTM (conditional LTM).

### dual connectivity communication scenario

At present, with the pursuit of speed, delay, high-speed mobility, and energy efficiency, as well as the diversity and complexity of services in future life, the 3GPP international standards organization starts to develop the 5G communications system. A main application scenario of the 5G is enhanced mobile broadband (enhanced mobile broadband, eMBB), ultra reliability and low latency communication (ultra reliability and low latency communication, URLLC), and massive machine type communication (massive machine type communications, mMTC).

The eMBB still aims to obtain multimedia content, services and data. Its requirements increase rapidly. On the other hand, the eMBB may be deployed in different scenarios, such as an indoor scenario, an urban scenario, and a rural scenario. A difference between a capability and a requirement of the eMBB is also relatively large. Therefore, the eMBB must be analyzed in detail with reference to a specific deployment scenario. Typical applications of URLLC include: factory automation, power automation, remote medical operation (surgery), and traffic safety assurance. Typical features of the mMTC include high connection density, small data volume, delay-insensitive services, low cost and long service life of modules.

In an early deployment of a new radio (new radio, NR), complete NR coverage is difficult to be obtained. Therefore, typical network coverage is a long term evolution (long term evolution, LTE) coverage and an island coverage mode of the NR. In addition, a large quantity of LTE is deployed below the 6GHz, and a spectrum below the 6GHz that can be used for the 5G is few. Therefore, NR must study the spectrum application above 6GHz, and the high frequency band has limited coverage and fast signal fading.

To implement 5G network deployment and commercial applications as soon as possible, a multi-standard dual connectivity (multiple RAT dual connectivity, MR-DC) architecture emerges. In the MR-DC architecture, a master node (master node, MN) and a secondary node (secondary node, SN) may provide an air interface transmission resource for data between the terminal device and the core network. There are multiple networking manners in a dual connectivity (dual connectivity, DC) scenario, which is not limited in embodiments of this application.

In R18, the cell handover, such as LTM, supports the MCG handover and SCG handover in the DC scenario. However, in the DC scenario, when the terminal device performs MCG handover, such as MCG LTM, the SCG needs to be released first (if any). In this scenario, the network device sets the MR-DC configuration of each candidate cell to "release", that is, when the terminal device applies the candidate cell configuration, the MR-DC release action is executed first. In this way, the system throughput may decrease.

To solve the foregoing problem, an embodiment of this application provides a wireless communication method. Cell handover of the terminal device is supported by determining configuration information (i.e., a first configuration) including an MCG configuration and/or a SCG configuration. For example, the first configuration includes only an MCG configuration, and thus MCG handover without a SCG is supported. For another example, the first configuration includes an MCG configuration and a SCG configuration, MCG handover with a SCG can be supported. The method can support coexistence of the foregoing two scenarios, thereby facilitating improving a system throughput, and improving configuration flexibility.

With reference to FIG. 3, the following describes a wireless communication method provided in an embodiment of this application.

Referring to FIG. 3, in step S310, the terminal device determines the first configuration based on the first information.

The first configuration is used for cell handover of the terminal device, or the first configuration is associated with the cell handover of the terminal device. The cell handover of the terminal device mentioned herein may be triggered by the network device or may be triggered by the terminal device, which is not limited in this application. For example, a cell handover may be any one of a conventional handover, a CHO, a LTM, and a condition LTM mentioned above. For another example, the cell handover of the terminal device mentioned herein may be a continuous handover, such as a continuous CHO and a continuous LTM.

The foregoing first configuration may include an MCG configuration and/or a SCG configuration to support different cell handover scenarios.

In some embodiments, the first configuration may include an MCG configuration and a SCG configuration, that is, the method may support MCG handover including a SCG, thereby facilitating increasing system throughput.

In some embodiments, the first configuration may include an MCG configuration, and do not include a SCG configuration. That is, the method may support SCG-free MCG handover, that is, being compatible with solutions in related technologies, thereby facilitating improving configuration flexibility. For example, the terminal device may flexibly select a configuration manner based on a usage requirement. It should be noted that if the first configuration does not include the SCG configuration, the terminal device needs to release the current serving SCG.

In some embodiments, the first configuration may include at least one of a candidate cell configuration, a target cell configuration, and a reference configuration.

In some embodiments, the terminal device may apply the first configuration in multiple manners. For example, the terminal device may release the source SCG or the serving SCG, and apply the first configuration. For another example, the terminal device may perform incremental configuration, such as performing incremental configuration on the current SCG configuration or reference SCG configuration. For another example, the terminal device may apply the first configuration based on the full/complete configuration procedure.

To support the foregoing different cell handover scenarios, how to determine the content of the first configuration is a problem that needs to be resolved. For example, how to reasonably instruct to release, update, and retain the SCG configuration is a problem that needs to be solved.

As mentioned above, the terminal device may determine the first configuration based on the first information. In a possible implementation, the first information may include one or more of the following: a candidate cell configuration, first indication information, second indication information, a cell group identifier, and a SCG reference configuration.

In some embodiments, the terminal device may determine a first configuration based on a candidate cell configuration, such as a candidate cell configuration carried in an RRC reconfiguration message. For example, the candidate cell configuration of the terminal device includes configuration information associated with the target cell of the terminal device, and the first information is the configuration information associated with the target cell, that is, the first configuration is determined based on the configuration information associated with the target cell. As an example, if the configuration information associated with the target cell includes the MCG configuration and the SCG configuration, the first configuration includes the MCG configuration and the SCG configuration. The SCG configuration in the first configuration may be a SCG configuration associated with the target cell. If the configuration information associated with the target cell includes only the MCG configuration, the first configuration includes the MCG configuration.

From the perspective of the network device, if the network device expects the terminal device to retain the SCG configuration when accessing a target cell, the candidate cell configuration may include the SCG configuration.

In some embodiments, the SCG configuration in the candidate cell configuration may be a full configuration or an incremental configuration. For different types of SCG configurations, the terminal device applies the first configuration in different manners. For example, if the SCG in the candidate cell configuration is configured as full configuration, the terminal device may release the source SCG or the serving SCG, and apply the first configuration, or the terminal device may apply the first configuration based on the full/complete configuration procedure. If SCG in the candidate cell configuration is configured as incremental configuration, the terminal device may execute incremental configuration on the current SCG configuration or SCG reference configuration.

In this case, the terminal device does not need to determine an operation on the SCG configuration, for example, releasing or retaining the SCG configuration. After the target cell is determined, the target cell configuration is applied, thereby facilitating reducing complexity of determining the first configuration by the terminal device. In addition, the method for determining the first configuration based on the candidate cell configuration can avoid a case in which the terminal device releases the SCG in the previous switching process, and the SCG configuration cannot be determined.

In some embodiments, the terminal device may determine a first configuration based on the first indication information. For example, the terminal device may receive the first indication information transmitted by the network device, or the network device may transmit the first indication information to the terminal device. The first indication information is used to indicate operations associated with the SCG configuration, such as retaining the SCG configuration, releasing the SCG configuration, applying the SCG reference configuration, and not applying the SCG reference configuration.

For example, the first indication information is used to indicate retaining or release of the SCG configuration. If the first indication information indicates that the SCG configuration is retained, the SCG configuration in the first configuration is the current SCG configuration of the terminal device. If the first indication information indicates that the SCG configuration is to be released, the first configuration does not include the SCG configuration.

As an example, the first indication information may include one or more bits. When a value of the one or more bits is a first value, the first indication information is used to instruct the terminal device to release the (current) SCG configuration. When the value of the one or more bits is a second value, the second indication information is used to instruct the terminal device to retain the (current) SCG configuration.

For another example, the first indication information is used to indicate whether to apply the SCG reference configuration. If the first indication information instructs to apply the SCG reference configuration, the SCG configuration in the first configuration is the SCG reference configuration. If the first indication information instructs not to apply the SCG reference configuration, the first configuration does not include the SCG configuration.

In an example, the first indication information may include one or more bits. When the value of the one or more bits is a third value, the first indication information is used to instruct the terminal device to apply the SCG reference configuration. When the value of the one or more bits is a fourth value, the first indication information is used to instruct the terminal device not to apply the SCG reference configuration.

In different scenarios, the first indication information with different meanings may be used. If the current configuration of the terminal device includes the SCG configuration, the first indication information may instruct to retain the SCG configuration or release the SCG configuration by using different values of one or more bits. If the current configuration of the terminal device does not include the SCG configuration, the first indication information may indicate, by using different values of one or more bits, that the SCG reference configuration is applied or that the SCG reference configuration is not applied. For example, if the terminal device has released the SCG configuration during the last handover, the first indication information may be used to indicate whether to apply the SCG reference configuration.

For another example, the first indication information may be used to instruct the terminal device to perform incremental configuration based on the current SCG configuration or reference configuration. The incremental configuration may be carried in the candidate cell configuration. It can be learned that in this case, the first configuration is determined based on the first indication information and the candidate cell configuration.

For another example, the first indication information may indicate whether the first configuration includes the SCG configuration. Further, the terminal device may determine an operation associated with the SCG configuration based on the first indication information.

If the first indication information indicates that the first configuration includes the SCG configuration, the terminal device needs to determine the SCG configuration. As an example, if the current configuration of the terminal device includes the SCG configuration, the terminal device retains the current SCG configuration. If the current configuration of the terminal device does not include the SCG configuration, the terminal device applies the SCG reference configuration.

When the first indication information indicates that the first configuration does not include the SCG configuration, if the current configuration of the terminal device does not include the SCG configuration, the terminal device does not perform an operation associated with the SCG configuration. If the current configuration of the terminal device includes the SCG configuration, the terminal device releases the current SCG configuration.

In some embodiments, the terminal device may determine the first configuration based on the second indication information. For example, the terminal device may receive the second indication information transmitted by the network device, or the network device may transmit the second indication information to the terminal device. The second indication information may be used to instruct to activate or deactivate the SCG configuration. As an example, if the second indication information instructs to activate the SCG configuration, the first configuration includes the SCG configuration. If the second indication information instructs to deactivate the SCG configuration, the first configuration does not include the SCG configuration.

In some embodiments, the terminal device may determine a first configuration based on a cell group identifier. The cell group identifier is used to instruct to release or retain the SCG configuration, or the cell group identifier is used to indicate whether to apply the SCG reference configuration. The cell group identifier may be associated with at least one serving cell and/or at least one candidate cell.

For example, if a cell group identifier associated with a serving cell of the terminal device is the same as a cell group identifier associated with a target cell of the terminal device, the terminal device retains the SCG configuration. If the cell group identifier associated with the serving cell is different from the cell group identifier associated with the target cell, the terminal device releases the SCG configuration or release the SCG.

In a case in which the SCG configuration of the terminal device has been released in a previous cell handover process, if the cell group identifier associated with the serving cell of the terminal device is the same as the cell group identifier associated with the target cell (that is, when the terminal device determines, by using the cell group identifier, that the SCG configuration needs to be retained), the terminal device may apply the SCG reference configuration, that is, determine the first configuration based on the SCG reference configuration. Alternatively, in the foregoing case, the terminal device may wait for the network device to add the SCG configuration again.

For another example, if the cell group identifier associated with the serving cell of the terminal device is the same as the cell group identifier associated with the target cell of the terminal device, the terminal device retains the SCG configuration, or the terminal device applies the SCG reference configuration associated with the first cell group, where the first cell group is associated with the serving cell and/or the target cell. If the cell group identifier associated with the serving cell is different from the cell group identifier associated with the target cell, the terminal device applies the SCG reference configuration associated with the target cell or the SCG configuration associated with the target cell. Optionally, the method may be applied to a scenario in which the first configuration includes the SCG configuration. It should be noted that the foregoing SCG reference configuration associated with the target cell may be a target cell-specific SCG reference configuration, or may be a SCG reference configuration corresponding to a cell group identifier associated with the target cell, or may be a common SCG reference configuration of all candidate cell (including the target cell).

In some embodiments, the foregoing cell group identifier may be managed by the network device.

For example, the network device may allocate cell group identifiers to different candidate cells, such as candidate master cells and/or candidate master cell groups. As an example, the network device may allocate the same cell group identifier to the candidate cells associated with the same SCG.

For another example, the network device may allocate a cell group identifier to one or more of a candidate SCG, a target SCG, a candidate SN, and a target SN. As an example, one candidate SCG, target SCG, candidate SN, and target SN may be associated with one or more cell group identifiers.

If one SCG is associated with multiple cell group identifiers, the network device may instruct the terminal device to execute a valid cell group identifier in a cell handover process, that is, a cell group identifier used in the cell handover process, or a cell group identifier used to determine a first configuration in the cell handover process.

In a case in which one SCG is associated with multiple cell group identifiers, the terminal device may determine to use which cell group identifier. Optionally, if the first configuration includes the SCG, when determining the first configuration based on the cell group identifier, the terminal device may determine to use the SCG configuration associated with which cell group identifier. In this case, the terminal device may report, the cell group identifier determined by the terminal device itself or the cell group identifier associated with the used SCG configuration, to the network device, so that the terminal device and the network device have a same understanding about the cell group identifier.

For another example, the network device may dynamically update the cell group identifier, for example, dynamically update the cell group identifier according to information such as a network status, a load status, and a throughput requirement.

In some embodiments, the foregoing mentioned SCG reference configuration may be a SCG reference configuration configured for the network device, or may be an initial SCG configuration stored in the terminal device (for example, a SCG configuration when a candidate cell configuration is received).

In some embodiments, a configuration granularity of the SCG reference configuration is one or more of the following: a terminal device; a cell group; each candidate cell and all candidate cell. The configuration granularity of the SCG reference configuration is each candidate cell, that is, the SCG reference configuration is configured for each candidate cell. The configuration granularity of the SCG reference configuration is all candidate cell, that is, the same or the common SCG reference configuration is configured for all the candidate cell. Based on this, the SCG reference configuration associated with the candidate cell mentioned in embodiments of this application may be dedicated SCG reference configuration of the candidate cell, or may be common SCG reference configuration of all the candidate cell.

Based on different configuration granularities of the SCG reference configuration, the SCG reference configuration may include the SCG reference configuration associated with the cell group, the SCG reference configuration associated with the terminal device, and the SCG reference configuration associated with the candidate cell. Optionally, the foregoing mentioned applying SCG reference configuration may include any one of applying a SCG reference configuration corresponding to the terminal device, applying a SCG reference configuration of a cell group associated with a serving cell or a target cell, and applying a SCG reference configuration associated with the candidate cell.

It should be noted that the foregoing method for determining the first configuration may be used separately or in combination with each other, which is not limited by this application. The following gives examples of a combination of methods for determining the first configuration.

For example, in a case in which the first indication information instructs the terminal device to retain the SCG configuration, the terminal device may determine the first configuration based on the cell group identifier: In a case in which the current configuration of the terminal device does not include the SCG configuration, if the cell group identifier of the serving cell is the same as the cell group identifier of the target cell, the first configuration includes the SCG reference configuration of the cell group associated with the serving cell and/or the target cell. If the cell group identifier of the serving cell is different from the cell group identifier of the target cell, the first configuration includes the SCG configuration of the target cell or the SCG reference configuration associated with the target cell.

For another example, in a case in which the cell group identifier is used to instruct to retain the SCG configuration, the terminal device may determine the first configuration based on the first indication information. The cell group identifier of the serving cell of the terminal device is the same as the cell group identifier of the target cell, thus it may be understood as instructing to retain the SCG configuration. In this case, if the first indication information indicates that the SCG reference configuration is applied, the first configuration includes the SCG reference configuration. If the first indication information indicates that the SCG reference configuration is not applied, the first configuration may include the current SCG configuration of the terminal device.

For another example, in a case in which the current configuration of the terminal device does not include the SCG configuration, and if the first indication information instructs to retain the SCG configuration, the first configuration is the SCG reference configuration.

In some embodiments, the first information may be predefined or pre-configuration information. For example, the pre-configuration information indicates that the SCG configuration is not included in the first configuration by default, or the SCG configuration is included in the first configuration by default.

In some embodiments, the terminal device determines that a time of the first configuration is associated with one or more of the following: a time t1 at which the terminal device receives a candidate cell configuration; a time t2 at which the terminal device receives a cell handover command; a time t3 at which a cell handover condition is satisfied; a time t4 at which a target cell is determined; or an implementation of the terminal device.

In different scenarios, the terminal device determines that the time of the first configuration is associated with different information. For example, in an LTM process, the time at which the terminal device determines the first configuration may be associated with one or more of t1, t2, t3, t4, and implementation of the terminal device. For another example, in a process of the condition LTM, the time at which the terminal device determines the first configuration may be associated with one or more of t1, t3, t4, and implementation of the terminal device. For another example, in a CHO process, the time at which the terminal device determines the first configuration may be associated with one or more of t1, t3, t4, and implementation of the terminal device. Herein, the time for determining the first configuration is associated with one or more of t1, t2, t3, and t4, and may refer to determining the first configuration at any instant among t1, t2, t3, and t4, or may refer to determining the first configuration at any instant between t1 and t2 (t1 is minimum and t2 is maximum among t1, t2, t3, and t4), or may refer to determining the first configuration (for example, t2 is maximum among t1, t2, t3, and t4) before the instant t2.

It should be noted that the terminal device needs to determine the first configuration before completing cell handover. The determining the time of the first configuration based on the implementation of the terminal device may be understood as: determining the time of the first configuration based on the implementation of the terminal device before the terminal device completes cell handover.

In some embodiments, after determining the first configuration, the terminal device may complete cell handover based on the first configuration. For example, in a case in which the first configuration includes the SCG configuration, the terminal device may hand over the secondary cell while handing over the master cell, thereby improving a system throughput in a handover process.

The following describes a method for applying the SCG configuration after the first configuration is determined, for example, after the SCG configuration in the first configuration is determined.

In some embodiments, the terminal device performs one or more of the following operations based on the first configuration: adding a SCG configuration; modifying the SCG configuration; releasing the SCG configuration; retaining the SCG configuration; or protocol stack resetting or reconstruction.

For example, the terminal device may release the current SCG configuration and apply the target cell configuration.

For another example, a processing manner of the SCG is determined according to a comparison result between a current configuration of the terminal device and a configuration of the target cell.

As an example, if the current configuration of the terminal device does not include the configuration of the target cell, the terminal device may perform operations such as adding and establishing based on the configuration of the target cell.

As an example, if the current serving cell configuration includes a part not included in the target cell configuration, the terminal device needs to perform a corresponding deletion and release operation based on the target cell configuration.

As an example, if the current configuration is the same as the target configuration, no operation is performed, or the current SCG configuration is retained.

As an example, if the current serving cell configuration is at least partially the same as the target cell configuration, the terminal device modifies/updates the current configuration, for example, adds, modifies, and releases the current serving cell configuration based on different parts of the configuration. The modification operation further includes bearer type switching, termination point switching, and the like. In addition, based on the modification operation, the terminal device needs to perform an operation such as corresponding packet data convergence protocol (packet data convergence protocol, PDCP) reconstruction, PDCP data restoration, radio link control (radio link control, RLC) reconstruction, medium access control (media access control, MAC) reset, MAC reconfiguration, and PDCP/RLC/MAC construction/release.

As an example, a protocol stack may be reset/reconstructed, such as a PDCP reconstruction/RLC reconstruction/MAC resetting. Optionally, when the MN key changes, resetting/reconstruction/reconfiguration may be performed on all the protocol stack. It should be noted that this example may be used in combination with the foregoing example, which is not limited in this application.

It should be noted that the foregoing configuration may be a cell group configuration, a bearer configuration (data radio bearer (data radio bearer, DRB)/signalling radio bearer (signalling radio bearer, SRB)), an entity configuration (PDCP/RLC/MAC), or the like.

As mentioned above, the method provided in embodiments of this application embodiment may be applied to a consecutive handover scenario. Table 1 provides a method for determining a first configuration in two consecutive handover processes.

**Table 1**

| | Retaining SCG configuration | Releasing SCG configuration | Updating SCG configuration |
|---|---|---|---|
| Retaining SCG configuration | First manner | First manner | First manner |
| Releasing SCG configuration | First manner | **Second manner** | First manner |
| Updating SCG configuration | First manner | First manner | First manner |

In Table 1, the first column is an operation associated with the SCG in the first cell handover, the first row is an operation associated with the SCG in the second cell handover, and a manner of determining the SCG configuration in a corresponding scenario is in the middle. For example, in the second row and the third column of table 1, the SCG configuration is retained in the first cell handover and the SCG configuration is released in the second cell handover, that is, a manner for determining the first configuration is the first manner.

The foregoing first manner is any method provided in embodiments of this application. That is, the first manner may include determining the first configuration in an explicit manner such as first indication information, second indication information, and candidate cell configuration information, or may include determining the first configuration in an implicit manner such as a cell group identifier and SCG reference configuration.

The foregoing second manner may be a method provided in a related technology, for example, the SCG configuration is released by default. The foregoing second manner may also be the method provided in embodiments of this application, for example, instructing to release the SCG configuration in two times of handover, or indicating that the first configuration does not include the SCG configuration.

The foregoing describes in detail the method embodiments of this application, and the following describes in detail apparatus embodiments of this application. It should be understood that the descriptions of the method embodiments correspond to descriptions of the apparatus embodiments, and therefore, for parts that are not described in detail, reference may be made to the foregoing method embodiments.

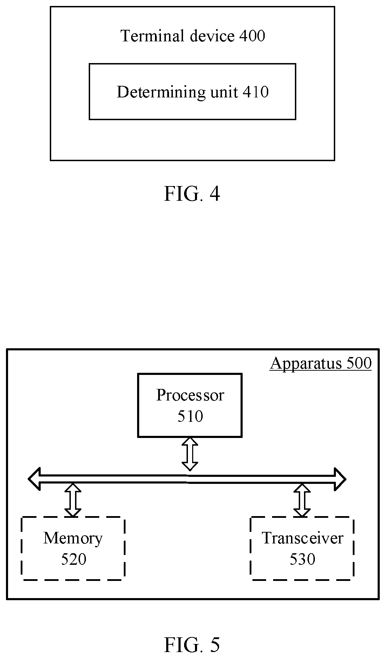

FIG. 4 is a schematic structural diagram of a terminal device according to an embodiment of this application. The terminal device 400 may include a determining unit 410.

The determining unit 410 is configured to determine a first configuration based on first information, where the first configuration is used for cell handover of the terminal device, and the first configuration includes a master cell group MCG configuration and/or a secondary cell group SCG configuration.

In some embodiments, the first information includes one or more of the following: a candidate cell configuration; first indication information; second indication information; a cell group identifier; and a SCG reference configuration. The first indication information and the cell group identifier are used to instruct to release or retain the SCG configuration, and/or the first indication information and the cell group identifier are used to indicate whether to apply the SCG reference configuration, and the second indication information is used to instruct to activate or deactivate the SCG configuration.

In some embodiments, the candidate cell configuration of the terminal device includes the configuration information associated with the target cell of the terminal device, and the first information is the configuration information associated with the target cell.

In some embodiments, if the configuration information associated with the target cell includes a SCG configuration, the first configuration includes a SCG configuration associated with the target cell; and/or if the configuration information associated with the target cell does not include the SCG configuration, the first configuration does not include the SCG configuration.

In some embodiments, if the first indication information instructs to retain the SCG configuration, the SCG configuration in the first configuration is the current SCG configuration of the terminal device; and if the first indication information instructs to release the SCG configuration, the first configuration does not include the SCG configuration. Alternatively, if the first indication information indicates that the SCG reference configuration is applied, the SCG configuration in the first configuration is the SCG reference configuration; and if the first indication information indicates that the SCG reference configuration is not applied, the first configuration does not include the SCG configuration.

In some embodiments, the device further includes a first processing unit, and the first processing unit is configured to: if a cell group identifier associated with a serving cell of the terminal device is the same as a cell group identifier associated with a target cell of the terminal device, retain the SCG configuration; and if the cell group identifier associated with the serving cell is different from the cell group identifier associated with the target cell, release the SCG configuration.

In some embodiments, the device further includes a second processing unit configured to: if a cell group identifier associated with a serving cell of the terminal device is the same as a cell group identifier associated with a target cell of the terminal device, retain a SCG configuration, or apply the SCG reference configuration associated with a first cell group, where the first cell group is associated with the serving cell and/or the target cell; and if the cell group identifier associated with the serving cell is different from the cell group identifier associated with the target cell, apply the SCG reference configuration associated with the target cell or the SCG configuration associated with the target cell.

In some embodiments, a configuration granularity of the SCG reference configuration is one or more of the following: a terminal device; the cell group; each of the candidate cell; or all the candidate cell.

In some embodiments, the terminal device performs one or more of the following operations based on the first configuration: adding a SCG configuration; modifying the SCG configuration; releasing the SCG configuration; retaining the SCG configuration; and protocol stack resetting or reconstruction.

In some embodiments, the terminal device determines that a time of the first configuration is associated with one or more of the following: a time at which the terminal device receives a candidate cell configuration; a time at which the terminal device receives a cell handover command; a time at which a target cell is determined; a time at which a cell handover condition is satisfied; or an implementation of the terminal device.

In some embodiments, the cell handover includes any of layer 1/layer 2 triggered mobility LTM, condition LTM, and conditional handover CHO.

In an optional embodiment, the determining unit 410 and the processing unit may be a processor 510, and the terminal device 400 may further include a memory 520 and a transceiver 530, which are specifically shown in FIG. 5.

FIG. 5 is a schematic structural diagram of a communications apparatus according to an embodiment of this application. The dotted line in FIG. 5 indicates that the unit or module is optional. The apparatus 500 may be configured to implement the method described in the foregoing method embodiments. The apparatus 500 may be a chip, a terminal device, or a network device.

The apparatus 500 may include one or more processors 510. The processor 510 may support the apparatus 500 to implement the method described in the foregoing method embodiments. The processor 510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 500 may further include one or more memories 520. The memory 520 stores a program, and the program may be executed by the processor 510, so that the processor 510 executes the method described in the foregoing method embodiments. The memory 520 may be independent of or integrated into the processor 510.

The apparatus 500 may further include a transceiver 530. The processor 510 may communicate with another device or chip by using the transceiver 530. For example, the processor 510 may transmit and receive data to and from another device or chip by using the transceiver 530.

An embodiment of this application further provides a computer-readable storage medium, configured to store a program. The computer-readable storage medium may be applied to the terminal or the network device provided in embodiments of this application, and the program causes the computer to execute the methods executed by the terminal device or the network device in embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal device or the network device provided in the embodiments of this application, and the computer program causes a computer to execute the method executed by the terminal device or the network device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, the mentioned "include" may be directly included, or indirectly included. Optionally, "include" mentioned in embodiments of this application may be replaced with "indicate" or "used for determining". For example, A includes B, which may be replaced with A indicates B, or A is used to determine B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "preconfigured" may be implemented by prestoring corresponding code or a corresponding table in a device (for example, including a terminal device and a network device) or in other manners that can be used for indicating related information, and a specific implementation thereof is not limited in this application. For example, pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, that is, may be at one location, or may be distributed on a plurality of network units. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

Some or all of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A wireless communication method, comprising:
determining, by a terminal device, a first configuration based on first information, wherein the first configuration is used for cell handover of the terminal device, and the first configuration comprises a master cell group MCG configuration and/or a secondary cell group SCG configuration.

2. The method according to claim 1, wherein the first information comprises one or more of the following:
a candidate cell configuration;
first indication information;
second indication information;
a cell group identifier; and
a SCG reference configuration,
wherein the first indication information and the cell group identifier are used to instruct to release or retain the SCG configuration, and/or the first indication information and the cell group identifier are used to indicate whether to apply the SCG reference configuration, and the second indication information is used to instruct to activate or deactivate the SCG configuration.

3. The method according to claim 2, wherein the candidate cell configuration of the terminal device comprises configuration information associated with a target cell of the terminal device, and the first information is configuration information associated with the target cell.

4. The method according to claim 3, wherein if the configuration information associated with the target cell comprises the SCG configuration, the first configuration comprises a SCG configuration associated with the target cell; and /or
if the configuration information associated with the target cell does not comprise the SCG configuration, the first configuration does not comprise the SCG configuration.

5. The method according to any one of claims 2 to 4, wherein if the first indication information instructs to retain the SCG configuration, the SCG configuration in the first configuration is a current SCG configuration of the terminal device; or if the first indication information instructs to release the SCG configuration, the first configuration does not comprise the SCG configuration; or
if the first indication information indicates that the SCG reference configuration is applied, the SCG configuration in the first configuration is the SCG reference configuration; or if the first indication information indicates that the SCG reference configuration is not applied, the first configuration does not comprise the SCG configuration.

6. The method according to any one of claims 2 to 5, further comprising:
if a cell group identifier associated with a serving cell of the terminal device is the same as a cell group identifier associated with a target cell of the terminal device, retaining, by the terminal device, the SCG configuration; and
if the cell group identifier associated with the serving cell is different from the cell group identifier associated with the target cell, releasing, by the terminal device, the SCG configuration.

7. The method according to any one of claims 2 to 5, further comprising:
if a cell group identifier associated with a serving cell of the terminal device is the same as a cell group identifier associated with a target cell of the terminal device, retaining, by the terminal device, the SCG configuration, or applying, by the terminal device, a SCG reference configuration associated with a first cell group, wherein the first cell group is associated with the serving cell and/or the target cell; and
if the cell group identifier associated with the serving cell is different from the cell group identifier associated with the target cell, applying, by the terminal device, a SCG reference configuration associated with the target cell or a SCG configuration associated with the target cell.

8. The method according to any one of claims 2 to 7, wherein a configuration granularity of the SCG reference configuration is one or more of the following:
a terminal device;
the cell group;
each of the candidate cell; or
all the candidate cell.

9. The method according to any one of claims 1 to 8, wherein the terminal device performs one or more of the following operations based on the first configuration:
adding the SCG configuration;
modify the SCG configuration;
releasing the SCG configuration;
retaining the SCG configuration; or
protocol stack resetting or reconstruction.

10. The method according to any one of claims 1 to 9, wherein the terminal device determines that a time of the first configuration is associated with one or more of the following:
a time at which the terminal device receives a candidate cell configuration;
a time at which the terminal device receives a cell handover command;
a time at which a target cell is determined;
a time at which a cell handover condition is satisfied; or
an implementation of the terminal device.

11. The method according to any one of claims 1 to 10, wherein the cell handover comprises any one of a layer 1/layer 2 triggered mobility LTM, a condition LTM, and a conditional handover CHO.

12. A terminal device, comprising:
a determining unit, configured to determine a first configuration based on first information, wherein the first configuration is used for cell handover of the terminal device, and the first configuration comprises a master cell group MCG configuration and/or a secondary cell group SCG configuration.

13. The device according to claim 12, wherein the first information comprises one or more of the following:
a candidate cell configuration;
first indication information;
second indication information;
a cell group identifier; and
a SCG reference configuration,
wherein the first indication information and the cell group identifier are used to instruct to release or retain the SCG configuration, and/or the first indication information and the cell group identifier are used to indicate whether to apply the SCG reference configuration, and the second indication information is used to instruct to activate or deactivate the SCG configuration.

14. The device according to claim 13, wherein the candidate cell configuration of the terminal device comprises configuration information associated with a target cell of the terminal device, and the first information is configuration information associated with the target cell.

15. The device according to claim 14, wherein if the configuration information associated with the target cell comprises the SCG configuration, the first configuration comprises a SCG configuration associated with the target cell; and /or
if the configuration information associated with the target cell does not comprise the SCG configuration, the first configuration does not comprise the SCG configuration.

16. The device according to any one of claims 13 to 15, wherein if the first indication information instructs to retain the SCG configuration, the SCG configuration in the first configuration is a current SCG configuration of the terminal device; or if the first indication information instructs to release the SCG configuration, the first configuration does not comprise the SCG configuration; or
if the first indication information indicates that the SCG reference configuration is applied, the SCG configuration in the first configuration is the SCG reference configuration; or if the first indication information indicates that the SCG reference configuration is not applied, the first configuration does not comprise the SCG configuration.

17. The device according to any one of claims 13-16, wherein the device further comprises a first processing unit, and the first processing unit is configured to:
retain the SCG configuration, if a cell group identifier associated with a serving cell of the terminal device is the same as a cell group identifier associated with a target cell of the terminal device; and
release the SCG configuration, if the cell group identifier associated with the serving cell is different from the cell group identifier associated with the target cell.

18. The device according to any one of claims 13-16, wherein the device further comprises a second processing unit, and the second processing unit is configured to:
if a cell group identifier associated with a serving cell of the terminal device is the same as a cell group identifier associated with a target cell of the terminal device, retain the SCG configuration, or apply a SCG reference configuration associated with a first cell group, wherein the first cell group is associated with the serving cell and/or the target cell; and
if the cell group identifier associated with the serving cell is different from the cell group identifier associated with the target cell, apply a SCG reference configuration associated with the target cell or a SCG configuration associated with the target cell.

19. The device according to any one of claims 13 to 18, wherein a configuration granularity of the SCG reference configuration is one or more of the following:
a terminal device;
the cell group;
each of the candidate cell; or
all the candidate cell.

20. The device according to any one of claims 12 to 19, wherein the terminal device performs one or more of the following operations based on the first configuration:
adding the SCG configuration;
modify the SCG configuration;
releasing the SCG configuration;
retaining the SCG configuration; or
protocol stack resetting or reconstruction.

21. The device according to any one of claims 12 to 20, wherein the terminal device determines that a time of the first configuration is associated with one or more of the following:
a time at which the terminal device receives a candidate cell configuration;
a time at which the terminal device receives a cell handover command;
a time at which a target cell is determined;
a time at which a cell handover condition is satisfied; or
an implementation of the terminal device.

22. The device according to any one of claims 12-21, wherein the cell handover comprises any one of a layer 1/layer 2 triggered mobility LTM, a condition LTM, and a conditional handover CHO.

23. A terminal device, comprising a memory and a processor, wherein the memory is configured to store a program, and the processor is configured to invoke the program in the memory, to cause the terminal device to execute the method according to any one of claims 1 to 11.

24. An apparatus, comprising a processor, configured to invoke a program from a memory, to cause the apparatus to execute the method according to any one of claims 1 to 11.

25. A chip, comprising a processor, configured to invoke a program from a memory, to cause a device installed with the chip to perform the method according to any one of claims 1 to 11.

26. A computer-readable storage medium, wherein a program is stored in the computer-readable storage medium, and the program causes a computer to execute the method according to any one of claims 1 to 11.

27. A computer program product, comprising a program, wherein the program causes a computer to execute the method according to any one of claims 1 to 11.

28. A computer program, wherein the computer program causes a computer to execute the method according to any one of claims 1 to 11.
